# FASCICULE DE BREVET EUROPEEN

(11) **EP 2 344 321 B1**
(45) Date de publication et mention de la délivrance du brevet: **01.08.2012**
(21) Numéro de dépôt: 09740473.5
(22) Date de dépôt: 19.08.2009
(51) Int. Cl.: B29C 63/02, B29C 63/16

(54) **DISPOSITIF ET PROCEDE POUR LE THERMOCOLLAGE D'UN REVETEMENT SOUPLE SUR UN SUPPORT**
VORRICHTUNG UND VERFAHREN ZUR THERMISCHEN BINDUNG EINER FLEXIBLEN BESCHICHTUNG AN EINEN TRÄGER
DEVICE AND METHOD FOR THERMALLY BONDING A FLEXIBLE COATING TO A SUPPORT

(30) Priorité: 01.09.2008 FR 0804783
(43) Date de publication de la demande: 20.07.2011
(73) Titulaire: C-Gex System's, 82350 Albias (FR)
(72) Inventeur: GUILHEM, Christian, F-82350 Albias (FR); GUILHEM, Jacques, F-82000 Montauban (FR)
(74) Mandataire: Cabinet BARRE LAFORGUE & associés
(86) Numéro de dépôt international: PCT/FR2009/051604
(87) Numéro de publication internationale: WO 2010/023394

(56) Documents cités:
- EP-A- 0 951 985
- FR-A- 2 655 905
- GB-A- 2 192 334
- US-A- 5 176 777
- US-A- 5 407 510

## Description

L'invention concerne un dispositif et un procédé pour le thermocollage d'un revêtement souple sur un support, et plus particulièrement pour le collage d'une housse en tissu ou en cuir sur un support constitué d'une armature et d'une forme en mousse afin de réaliser des garnitures de siège.

On connaît différents procédés et dispositifs pour le thermocollage d'un revêtement souple sur un support. Par exemple, le document GB 2 192 334 décrit un procédé dans lequel le revêtement souple est recouvert d'une feuille d'adhésif fusible puis préformé dans un moule rigide chauffé avant d'être conformé sur le support. Le document EP 0 951 98-5 propose de recouvrir le support avec le revêtement puis de plaquer celui-ci sur le support au moyen d'une vessie souple remplie de fluide chaud. On connaît également du document US 5,407,510 un procédé selon lequel on recouvre un support préformé par un revêtement souple, on immobilise l'ensemble par un réseau de tubes parcourus par un fluide chaud ou froid avant d'enfoncer l'ensemble dans un lit fluidisé chauffé.

On connaît en particulier du document EP 0 350 979 un procédé et un dispositif d'habillage d'un objet faisant usage d'un lit de particules fluidisé par un flux de gaz chaud sur lequel on dépose une housse en tissu préalablement enduite de colle thermo-activable sur laquelle on applique le support à habiller. Si ce procédé donne d'excellents résultats en termes de qualité, le dispositif qui le met en oeuvre est quant à lui perfectible sur de nombreux points.

En effet, l'utilisation d'un gaz chaud pour simultanément fluidiser le lit de particules et activer la colle présente certains problèmes. Par exemple, l'air utilisé comme gaz est difficilement chauffé à plus de 70°C sous peine de voir l'ambiance thermique du poste de travail dépasser les normes admises. Or, à cette température, le temps nécessaire à l'activation de la colle est sensiblement plus long qu'à des températures plus élevées ce qui limite la productivité. A titre d'exemple, une élévation de température de 15 à 20°C supplémentaires permet de réduire la durée d'activation de moitié. En outre, le flux de gaz chaud étant maintenu pour conserver le lit fluidisé, le revêtement et le support accumulent de l'énergie thermique qui non seulement est dissipée inutilement, mais encore ralentit la phase de réticulation de la colle, présentant encore un impact défavorable sur la qualité du collage et les cadences de production. De plus, lors d'interruptions de la production, il est nécessaire de laisser le flux de gaz activé sous peine de voir retomber la température du dispositif au-dessous de la température minimale d'activation de la colle et de devoir attendre un temps de chauffe avant la remise en route. Ceci entraîne donc non seulement un échauffement de la température ambiante des ateliers et donc une dégradation des conditions de travail du personnel, mais encore une perte économique liée au gaspillage d'énergie.

La présente invention vise à pallier ces inconvénients en proposant un dispositif adapté pour le thermocollage d'un revêtement souple sur un support qui permette une montée rapide en température, pendant un temps suffisant pour permettre l'activation de la colle mais néanmoins assez bref pour ne pas échauffer l'ambiance de travail et qui soit d'une exploitation plus économique et plus performante que les dispositifs de la technique antérieure.

L'invention vise également à proposer un procédé de collage d'un revêtement souple sur un support qui soit particulièrement adapté à une mise en oeuvre par un dispositif selon l'invention.

Pour ce faire, l'invention concerne un dispositif pour le thermocollage d'un revêtement souple sur un support, du type comprenant :
- une enceinte pour lit de particules fluidisé par un flux de gaz, comportant un répartiteur de gaz, une grille de diffusion, un lit de particules et une toile souple de couverture,
- un système d'alimentation en gaz,
- un organe de compression apte à presser le support sur le lit fluidisé,
caractérisé en ce que l'enceinte comporte une zone interne, dite caisson de chauffage, de taille inférieure à celle de l'enceinte, placée sensiblement au centre de celle-ci, ledit caisson de chauffage comportant un répartiteur de gaz, une grille de diffusion et un système d'alimentation en gaz distincts et isolés de ceux de l'enceinte, ledit caisson de chauffage comprenant en outre des moyens de chauffage adaptés pour être placés dans le lit de particules.

L'inventeur a en effet constaté que la qualité globale du collage d'un revêtement souple sur un support tel que par exemple un dossier ou une assise de siège dépend essentiellement du bon collage de la partie centrale de la pièce. Ainsi, en divisant le lit fluidisé en deux parties, une partie centrale chauffée et une partie périphérique dont la température est moins élevée, l'opération de collage devient moins consommatrice d'énergie tout en présentant une qualité constante ou supérieure.

Avantageusement et selon l'invention, le caisson de chauffage est placé en contrebas de l'enceinte, le niveau de sa grille de diffusion étant plus bas que celui de la grille de diffusion de l'enceinte. De ce fait, la hauteur du lit de particules, en particulier à l'état statique lorsque les flux de gaz sont arrêtés, et ce faisant, la quantité de particules est plus importante dans la zone du caisson de chauffage. On dispose ainsi d'une masse de particules qui coopère avec les moyens de chauffage du caisson de chauffage pour former un accumulateur de chaleur, à une température bien plus élevée que ne le permettrait un gaz.

Avantageusement et selon l'invention, les moyens de chauffage sont placés au droit de la grille de diffusion du caisson de chauffage, au niveau ou au-dessous de la grille de diffusion de l'enceinte. Ainsi, la chaleur accumulée dans le lit de particules peut être très rapidement mise en oeuvre par un flux de gaz issu de la grille de diffusion du caisson de chauffage pour former un lit fluidisé dont la partie centrale est à haute température non seulement par l'échauffement très rapide du flux de gaz au contact de multiples particules, plus efficace qu'un simple passage sur une résistance chauffante, mais encore par les particules elles-mêmes qui se diffusent dans le lit fluidisé.

Avantageusement et selon l'invention, les moyens de chauffage sont réalisés par au moins une résistance électrique. Le chauffage électrique permet une mise en oeuvre simple et efficace grâce à ses possibilités de régulation rapide même à haute température.

Avantageusement et selon l'invention, le dispositif comporte en outre des moyens de mesure de température associés respectivement aux moyens de chauffage, au lit de particules dans le caisson de chauffage et au lit de particules dans la partie de l'enceinte extérieure au caisson de chauffage.

Avantageusement et selon l'invention, selon une première variante, le système d'alimentation en gaz du caisson de chauffage comporte une centrale de ventilation distincte de celle de l'enceinte. Selon une variante alternative, les systèmes d'alimentation en gaz du caisson de chauffage et de l'enceinte comportent une centrale de ventilation commune alimentant deux tubulures distinctes et au moins la tubulure d'alimentation du caisson de chauffage comporte une vanne permettant l'interruption et/ou le réglage de l'alimentation dudit caisson en gaz de fluidisation. Ces variantes alternatives permettent toutes deux de régler les flux de gaz de fluidisation indépendamment pour le caisson de chauffage et pour le reste de l'enceinte.

Avantageusement et selon l'invention, le dispositif comporte en outre un automate programmable adapté pour au moins recevoir des informations des moyens de mesure de température et commander les moyens de chauffage et les systèmes d'alimentation en gaz du caisson de chauffage et de l'enceinte. La mesure des températures dans le caisson de chauffage et dans le reste de l'enceinte associée à la commande des moyens de chauffage et des flux de gaz permet de moduler les températures du lit fluidisé en fonction des besoins du procédé de thermocollage.

Avantageusement et selon l'invention, l'automate programmable est également adapté pour commander l'organe de compression et exécuter un cycle d'opérations enchaînant des commandes sur ledit organe de compression et les systèmes d'alimentation en gaz respectifs du caisson de chauffage et de l'enceinte. Il est ainsi possible d'automatiser complètement l'opération de collage du revêtement.

Avantageusement et selon l'invention, le dispositif comprend également une grille de reprise d'effort s'étendant sur toute la surface de l'enceinte, au-dessus de la grille de diffusion de celle-ci, adaptée pour résister à des efforts développés par l'organe de compression lorsque le lit de particules est solidifié et pour présenter une résistance minimale aux flux de gaz et de particules lorsque le lit de particules est fluidisé. Cette grille de reprise d'effort permet ainsi de protéger les grilles de diffusion lors des phases de compression du revêtement souple sur le support, lorsque le lit de particules est solidifié.

L'invention s'étend également à un procédé de thermocollage d'un revêtement souple sur un support, du type mettant en oeuvre un dispositif selon l'une quelconque des revendications précédentes, dans lequel on utilise un organe de compression apte à presser le support sur un lit de particules fluidisées par un flux de gaz généré par un système d'alimentation en gaz dans une enceinte comportant un répartiteur de gaz, une grille de diffusion, un lit de particules et une toile souple de couverture, procédé caractérisé en ce que l'on chauffe le lit de particules avec des moyens de chauffage adaptés pour être placés dans le lit de particules et on alimente en gaz une zone interne, dite caisson de chauffage, de taille inférieure à celle de l'enceinte, placée sensiblement au centre de celle-ci, ledit caisson de chauffage comportant un répartiteur de gaz, une grille de diffusion et un système d'alimentation en gaz distincts et isolés de ceux de l'enceinte.

Avantageusement et selon l'invention, le procédé comprend des étapes dans lesquelles :
- on enduit au moins une des faces en regard du revêtement et du support avec une colle thermo-activable,
- on positionne le revêtement sur la toile souple de couverture du lit fluidisé en regard du support fixé sur l'organe de compression,
- on commande le début d'un cycle d'opérations de l'automate programmable, lequel
- commande la descente de l'organe de compression vers le lit fluidisé, et concomitamment l'alimentation en gaz au moins du caisson chauffant de manière à générer un flux de gaz et un lit fluidisé de particules à haute température,
- contrôle l'organe de compression de manière à enfoncer ledit support dans le lit fluidisé à haute température pendant une durée propre à permettre l'activation de la colle,
- commande ensuite l'arrêt de l'alimentation en gaz au moins du caisson chauffant de manière à solidifier au moins partiellement le lit de particules et simultanément l'application d'une première pression sur le support de manière à plaquer le revêtement sur le support pendant une durée propre à permettre la réticulation de la colle, et
- à l'issue de ces opérations, on signale une fin de cycle à l'automate qui commande une remontée de l'organe de compression pour déchargement du support revêtu.

Avec ce procédé particulièrement adapté au dispositif précité, il est possible d'enfoncer le support et son revêtement dans un lit fluidisé soumis à un flux de gaz dont la température est suffisamment élevée pour activer très rapidement la colle, puis en jouant sur l'alimentation en gaz, d'aplatir le revêtement entre le support et au moins une partie du lit de particules devenu solide pour maintenir en contact les deux parties enduites de colle le temps de la réticulation de celle-ci.

Avantageusement et selon une variante de l'invention, lorsque l'automate commande l'arrêt de l'alimentation en gaz du caisson, il commande simultanément l'alimentation de la périphérie de l'enceinte en gaz à température ambiante afin de refroidir plus rapidement le lit de particules et d'accélérer la réticulation de la colle. Cette étape optionnelle permet également d'éviter un éventuel emballement thermique de la table.

Avantageusement et selon l'invention, avant de commander la remontée de l'organe de compression, l'automate commande l'arrêt de toute alimentation en gaz et l'application par l'organe de compression d'une pression d'appui supplémentaire du support sur le lit fixe. Cette étape optionnelle permet d'écraser la mousse du support sur le revêtement tout en restant dans un « moule » conservant la forme initiale et d'améliorer la tenue du collage.

Avantageusement et selon l'invention, l'automate surveille les températures de la table en dehors des cycles de production et déclenche une alimentation en gaz du caisson de chauffage lorsque la température du lit de particules dans la périphérie de l'enceinte descend au-dessous d'un seuil prédéterminé. Cette opération permet de maintenir la table de garnissage opérationnelle et de réduire les temps de remise en route lorsque la production s'interrompt temporairement, sans pour autant élever la température des ateliers et/ou gaspiller de l'énergie.

Alternativement, et toujours selon l'invention, l'automate surveille les températures de la table en dehors des cycles de production et déclenche une alimentation en gaz de la périphérie de l'enceinte lorsque la température du lit de particules excède un seuil prédéterminé. Ainsi, en cas de défaillance de la régulation thermique des moyens de chauffage, ou pour toute autre raison (fausse manoeuvre d'un opérateur, etc.), on dispose d'une sécurité thermique supplémentaire.

L'invention concerne également un dispositif et un procédé caractérisés en combinaison par tout ou partie des caractéristiques mentionnées ci-dessus ou ci-après.

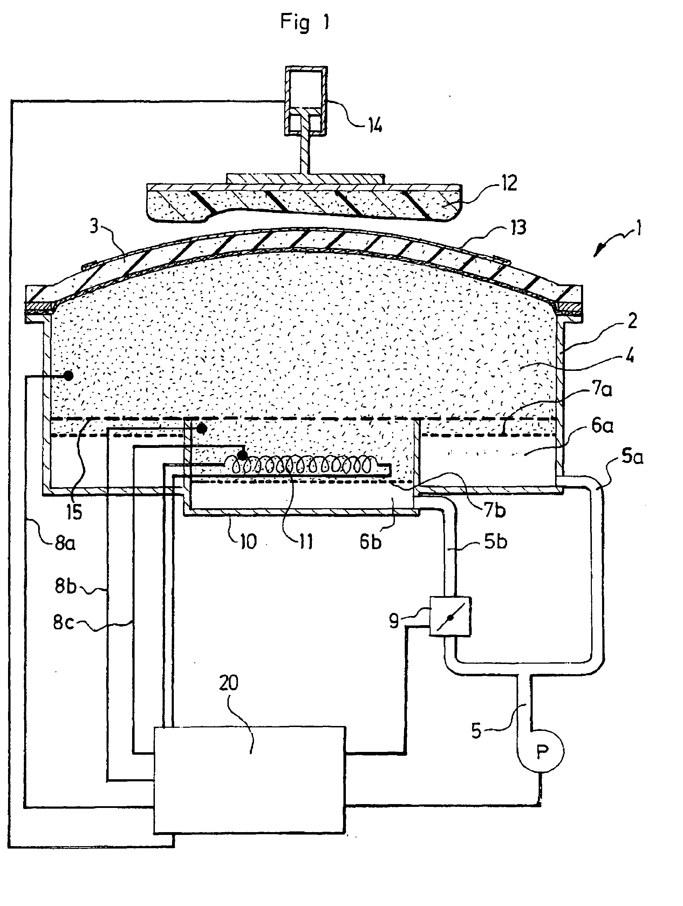

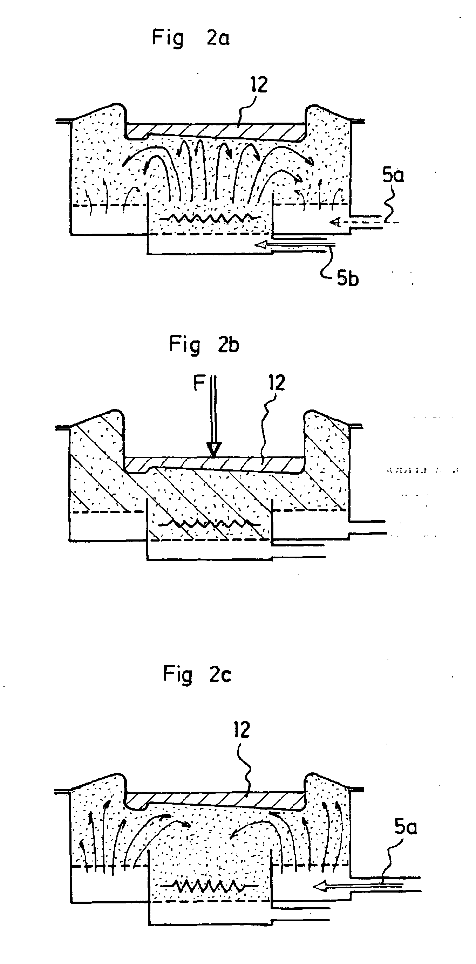

D'autres buts, caractéristiques et avantages de l'invention apparaîtront au vu de la description qui va suivre et des dessins annexés dans lesquels :
■ la figure 1 est une vue schématique en coupe partielle d'un dispositif selon l'invention.
■ les figures 2a, 2b et 2c sont des vues schématiques du dispositif lors de diverses phases du procédé selon l'invention, utiles pour la compréhension du comportement du lit fluidisé.

Le dispositif selon l'invention représenté à titre d'exemple à la figure 1, aussi appelé table de garnissage, est du type de celui représenté à la figure 1 du brevet EP 0 350 979 précité. Il est destiné à réaliser l'assemblage et le collage d'un revêtement souple sur un support par exemple en mousse, pour obtenir une garniture de siège.

Le dispositif comporte une table 1 comprenant une enceinte 2 parallélépipédique, dont la hauteur est inférieure à ses autres dimensions. L'enceinte 2 contient un lit de particules 4 composé par exemple de microbilles de verre d'un diamètre compris entre 75 et 150 micromètres, et préférentiellement sensiblement égal à 100 µm. Ces particules reposent sur une grille de diffusion 7a par exemple réalisée par une plaque de bois aggloméré microporeux adaptée pour laisser passer un flux de gaz provenant d'un espace, appelé répartiteur de gaz 6a, situé entre la grille de diffusion 7a et le fond de l'enceinte 2, tout en retenant les microbilles de verre dans la partie supérieure de l'enceinte. L'enceinte 2 est fermée sur le dessus par une toile souple 3 perméable, dont la porosité est adaptée pour retenir les microbilles tout en laissant passer le gaz.

La table 1 comporte également, en partie centrale, un caisson 10, dit caisson chauffant, dont les dimensions horizontales sont inférieures à celles de l'enceinte 2. Le caisson chauffant 10 est placé en contrebas de l'enceinte 2. Les parois latérales du caisson chauffant s'étendent au moins jusqu'au-dessus de la grille de diffusion 7a de l'enceinte et découpent la forme de celui-ci dans cette grille. Le caisson chauffant 10 comporte, de manière analogue à l'enceinte 2, une grille de diffusion 7b délimitant un répartiteur de gaz 6b s'étendant entre le fond du caisson 10 et la grille de diffusion 7b. La grille de diffusion 7b est également réalisée par une plaque de bois aggloméré microporeux qui retient le lit de particules 4 commun avec l'enceinte 2, et elle est également placée en contrebas de la grille de diffusion 7a de l'enceinte 2. On note donc que l'épaisseur du lit de particules au droit du caisson chauffant est supérieure à celle du même lit de particules dans la partie périphérique de la table 1, entre les bords du caisson 10 et ceux de l'enceinte 2.

Le caisson chauffant comporte également des moyens de chauffage 11, par exemple une ou des résistances électriques, noyés dans le lit de particules 4 au droit du caisson, au-dessus de la grille de diffusion 7b dudit caisson. Préférentiellement, ces moyens de chauffage 11 sont placés entre le niveau de la grille de diffusion 7b du caisson chauffant et celui de la grille de diffusion 7a de l'enceinte 2, dans l'épaisseur supplémentaire du lit de particules 4 existant au droit du caisson chauffant.

Des moyens de mesure de température, en l'occurrence des sondes de température 8a, 8b et 8c sont associées respectivement au lit de particules dans la partie périphérique de la table (entre les bords du caisson 10 et ceux de l'enceinte 2), au lit de particules dans le caisson chauffant 10, en partie haute de celui-ci au-dessus des moyens de chauffage 11, et aux moyens de chauffage 11 eux-mêmes.

Au-dessus du caisson chauffant 10 et s'étendant sur toute la surface de l'enceinte 2, une grille de reprise d'effort 15, formée par exemple dans une tôle de métal ajourée, permet de rigidifier l'ensemble de la table de garnissage, particulièrement dans le sens vertical d'appui de l'organe de compression 14. Cette grille de reprise d'effort 15 est fixée sur la périphérie de l'enceinte 2, juste au-dessus de la grille de diffusion 7a, et repose également sur les bords du caisson chauffant 10. Les trous ou jours de la grille de reprise d'effort 15 sont adaptés pour introduire le moins de résistance possible au passage du flux de gaz et de particules du lit fluidisé tout en laissant subsister une surface de tôle suffisante, compte tenu de son épaisseur, pour encaisser les efforts développés par l'organe de compression 14 lorsque celui-ci presse le support 12 vers le fond de l'enceinte 2, particulièrement quand le lit de particules est solidifié. De cette manière, les grilles de diffusion 7a et 7b, ainsi que les moyens de chauffage 11 et les sondes de températures 8b et 8c sont protégés.

Les répartiteurs de gaz 6a et 6b respectifs de l'enceinte 2 et du caisson chauffant 10 sont isolés l'un de l'autre, le répartiteur de gaz 6a étant fermé par les parois de l'enceinte 2 à sa périphérie et par les parois du caisson 10, et le répartiteur 6b situé en contrebas étant clos par les parois du caisson 10. Chaque répartiteur de gaz est relié à un système d'alimentation en gaz associé, lui aussi distinct et isolé de l'autre. Ainsi, le répartiteur de gaz 6a de l'enceinte 2 est alimenté par une tubulure 5a en provenance d'une centrale de ventilation 5. Le répartiteur de gaz 6b du caisson chauffant 10 est alimenté en gaz par une tubulure 5b comportant une vanne 9 permettant de régler le flux de gaz en provenance de la centrale de ventilation 5. Ce mode de réalisation est le plus économique, mais d'autres modes (non représentés) sont possibles et éventuellement plus performants. Ainsi, deux centrales de ventilation distinctes, l'une pour l'enceinte 2 et l'autre pour le caisson chauffant 10, permettraient une totale indépendance de l'alimentation en gaz de chaque partie. De même, avec une centrale de ventilation commune, une seconde vanne de réglage placée sur la tubulure 5a permettrait cette indépendance des flux de gaz. Néanmoins, il a pu être démontré que le mode de réalisation représenté était suffisant pour obtenir de bons résultats.

Le dispositif comporte en outre un automate programmable 20, auquel sont reliées les sondes de température 8a, 8b et 8c. L'automate 20 est adapté pour commander les divers éléments de la table de garnissage en fonction d'instructions préalablement programmées et des mesures effectuées.

Ainsi, l'automate 20 commande les moyens de chauffage 11 pour réguler la température du lit de particules au droit du caisson chauffant, température mesurée par la sonde 8b. Par exemple, l'automate 20 est programmé pour maintenir une température du lit de particules dans le caisson chauffant avoisinant les 120°C en l'absence de flux de gaz dans le caisson. On note que du fait de la faible conduction thermique des microbilles de verre, cette température élevée reste confinée dans le caisson chauffant 10 qui fonctionne alors comme un accumulateur de chaleur. Ainsi, l'énergie de chauffe apportée par les moyens de chauffage 11 n'est pas dissipée dans l'air ambiant comme c'était le cas dans les dispositifs connus.

L'automate programmable 20 est également adapté pour commander les systèmes d'alimentation en gaz de l'enceinte 2 et du caisson chauffant 10. Pour cela, dans l'exemple représenté, il commande la centrale de ventilation 5 et la vanne 9. Cette commande peut s'effectuer en tout ou rien, selon un rapport cyclique variable ou encore, de façon préférentielle, par une commande analogique. Ainsi l'automate 20 commande la puissance de ventilation à fournir par la centrale de ventilation 5 et la part à attribuer au caisson chauffant 10 par l'ouverture de la vanne 9.

En outre, en commandant la puissance de la centrale de ventilation 5, l'automate 20 est adapté pour régler la vitesse linéaire du gaz au travers des grilles de diffusion 7a et 7b entre 1,5 Vmf et 6 Vmf, où Vmf est la vitesse minimale de fluidisation du lit de particules.

Le dispositif selon l'invention comporte également un organe de compression 14, sous la forme par exemple d'un vérin pneumatique, hydraulique ou électrique, dont la tige est adaptée pour tenir un support 12, par exemple un bloc de mousse sur une armature, sur lequel on doit fixer un revêtement souple 13. L'organe de compression 14 est également commandé par l'automate programmable 20 de façon à enfoncer le support 12 dans le lit fluidisé de particules comme décrit dans le brevet EP 0 350 979 précité, auquel on pourra se référer pour les opérations générales d'habillage du support non spécifiques au dispositif de la présente invention.

L'automate programmable 20 est en outre adapté pour exécuter un cycle d'opérations enchaînant des commandes sur les différents organes du dispositif, dont en particulier l'organe de compression et les systèmes d'alimentation en gaz, afin de mettre en oeuvre un procédé de thermocollage du revêtement souple 13 sur le support 12.

Lors de la mise en fonctionnement du dispositif, et avant le démarrage d'un cycle de collage, l'automate programmable 20 commande la mise en route des moyens de chauffage 11, tout en conservant la centrale de ventilation 5 à l'arrêt. La chaleur fournie est accumulée dans le lit de microbilles dans le caisson de chauffage 10. La température maximale supportée par les microbilles de verre étant de l'ordre de 600°C, l'automate 20 utilise la sonde de température 8c pour s'assurer qu'une température de sécurité, par exemple de l'ordre de 200°C n'est jamais dépassée au contact de la résistance. L'automate utilise également la sonde de température 8b, placée dans le lit de microbilles au-dessus des moyens de chauffage 11, pour réguler une température de l'ordre de 120°C des particules situées dans le caisson de chauffage 10.

Lors d'un cycle de collage, un opérateur positionne un support 12 en bout de la tige de l'organe de compression 14 et un revêtement 13 sur la toile souple 3 de la table 1. Au moins l'une des faces en regard du support 12 ou du revêtement 13 a été préalablement enduite d'une colle thermo-activable, par exemple par pulvérisation sur un poste de travail voisin. Une fois les solvants servant à la pulvérisation évaporés, la colle se présente sous la forme d'une pellicule sèche au toucher, pouvant ainsi permettre le positionnement respectif des pièces. Il est alors nécessaire de porter cette pellicule de colle à une température élevée, dite température de thermo-activation, pendant un temps déterminé en fonction de cette température, pour qu'elle retrouve son pouvoir collant.

Une fois le support 12 et le revêtement 13 positionnés sur le dispositif, l'opérateur commande le début d'un cycle d'opérations, par exemple au moyen d'un interrupteur (non représenté) relié à l'automate programmable 20.

L'automate programmable 20 commande alors la descente de l'organe de compression 14 dont la tige porte le support 12 vers la table 1. Simultanément, l'automate commande la mise en route de la centrale de ventilation 5 de manière à générer un flux de gaz dans la table de garnissage pour fluidiser le lit de microbilles. Plus particulièrement, l'automate programmable 20 commande l'ouverture de la vanne 9 de réglage du flux de gaz du caisson chauffant de manière à privilégier le flux de gaz entrant par la tubulure 5b du caisson par rapport à celui entrant par la tubulure 5a alimentant le reste de l'enceinte.

Dans ce mode de fonctionnement représenté à la figure 2a, le flux de gaz à température ambiante entrant par la tubulure 5b est réparti dans le caisson par le répartiteur de gaz 6b et traverse la grille de diffusion 7b pour fluidiser le lit de particules au droit du caisson chauffant 10. Le gaz entre ainsi en contact non seulement avec les moyens de chauffage 11, mais aussi et surtout avec les microbilles de verre chauffées à une température avoisinant les 120°C. L'immense surface de contact que représentent les millions de microbilles à haute température permet de chauffer instantanément le gaz. En outre, les microbilles de verre sont elles-mêmes entraînées vers le haut par le flux de gaz et participent à générer un lit fluidisé de particules à haute température. Le caisson chauffant 10 ayant été avantageusement placé en position centrale par rapport à la table 1, c'est-à-dire approximativement dans l'axe du support 12, on comprend donc qu'ainsi le support 12 est plaqué dans un lit fluidisé permettant une chauffe et donc une thermo-activation très rapide de la couche de colle placée entre le support et le revêtement. La sonde de température 8b permet la mesure de la température du flux de gaz et de particules formant le lit fluidisé au droit du caisson chauffant 10. L'automate programmable 20 détermine une durée nécessaire à la thermo-activation de la colle en fonction de cette température et des caractéristiques de la colle. Il contrôle également la pression appliquée par l'organe de compression 14 sur le support 12 de façon à enfoncer le support dans le lit fluidisé et à plaquer le revêtement sur le support du fait de la déformation du revêtement et de la toile souple de couverture.

A l'issue de la durée de thermo-activation, l'automate programmable 20 commande la vanne 9 de manière à arrêter le flux de gaz traversant le caisson chauffant 10.

Selon une première variante, l'ensemble des flux de gaz de l'enceinte 2 et du caisson chauffant 10 sont arrêtés. De ce fait, le lit de particules 4 se solidifie et constitue un moule à la forme du support 12. Simultanément, l'organe de compression 14 est commandé pour appliquer une première pression visant à plaquer le support 12 contre ce moule, comme représenté à la figure 2b, afin d'aplatir le revêtement 13 sur le support. Cette pression est maintenue pendant le temps nécessaire à la réticulation de la colle. On a pu constater qu'une fois le flux de gaz au travers du caisson chauffant 10 arrêté, la surface du lit de particules immédiatement au-dessous et autour du support 12 refroidissait naturellement rapidement jusqu'à des températures de l'ordre de 65°C, permettant la réticulation de la colle.

Selon une seconde variante, optionnelle, illustrée à la figure 2c, il est possible d'améliorer encore le refroidissement local en maintenant quelques instants l'alimentation en gaz de l'enceinte 2 après avoir coupé celle du caisson chauffant 10. Ainsi, le lit de particules se solidifie au droit du caisson chauffant 10 permettant l'application de la première pression pour aplatir le revêtement 13 sur le support 12, alors qu'un flux de gaz à température ambiante environne encore le support 12. Après un délai qui peut être préprogrammé ou déterminé par la mesure des températures par les sondes 8a à 8c, et plus particulièrement par la sonde 8a mesurant la température globale de la table, l'automate 20 coupe l'alimentation en gaz de l'enceinte 2 et l'ensemble du lit de particules se solidifie.

Avantageusement, le maintien de la pression du support sur le lit fluidisé ainsi refroidi par du gaz à température ambiante permet d'accélérer la réticulation de la colle et de diminuer le temps pendant lequel cette pression doit être maintenue pour garantir un collage sans défauts. La sonde de température 8a, placée dans le lit fluidisé dans la partie périphérique de la table, renseigne l'automate sur la température moyenne du lit fluidisé et permet de déterminer le temps de réticulation de la colle.

De manière optionnelle, il est possible de prévoir une étape supplémentaire dans le cycle de l'automate programmable 20, étape dans laquelle il commande l'arrêt de toute alimentation en gaz de la table, ce qui entraîne l'arrêt de la fluidisation du lit de particules qui conserve, de manière connue en elle-même, la forme exacte du support. Il est également possible dans cette étape, si la centrale de ventilation le permet, de générer une aspiration visant à bloquer plus fermement le lit de particules. Une fois le lit de particules bloqué, l'automate programmable commande l'organe de compression de manière à appliquer une pression supplémentaire du support sur le lit fixe, ce qui permet d'écraser fermement la couche de colle et renforcer encore la qualité du collage.

D'autres opérations peuvent être également réalisées à cette étape comme par exemple le rabattage des bords du revêtement et leur fixation par un cordon coulissant.

Enfin, à l'issue de ces opérations, l'opérateur signale la fin du cycle par un appui sur un interrupteur (non représenté) et l'automate commande la remontée de l'organe de compression de façon à permettre le déchargement du support. Bien entendu, la fin du cycle peut également être déterminée automatiquement au bout d'une durée prédéterminée.

On a pu constater qu'avec le dispositif selon l'invention et le procédé adapté pour être mis en oeuvre par ce dispositif, il était possible de réaliser de substantielles économies d'énergie sans sacrifier la qualité du résultat obtenu, et d'augmenter la productivité tout en améliorant les conditions de travail des opérateurs. En effet, même si la puissance de chauffage installée, nécessaire pour chauffer les microbilles à haute température, est de 30% supérieure à une installation classique, son fonctionnement selon des cycles d'activation plus rapides permet de dégager 30% d'économies de consommation globale. En outre, les temps de cycle ont été raccourcis : la durée de thermo-activation a pu être réduite de 30 secondes à moins de 8 secondes (pour un exemple donné) et cette réduction du temps de chauffe a permis de ne plus avoir d'énergie perdue dans une chauffe inutile du support en mousse, qui est alors manipulable plus rapidement. On a pu également noter que la température ambiante autour d'un poste de travail équipé avec le dispositif de l'invention était notablement réduite. En effet, la température moyenne du lit fluidisé dans la partie périphérique de la table 1 est contrôlée par la sonde de température 8a pour éviter tout emballement thermique éventuel de la table. Cette température périphérique est maintenue inférieure ou égale à 65°C, par exemple en permettant une ventilation périphérique pendant des phases d'inactivité (chargement/déchargement), alors même que les moyens de chauffage 11 continuent à maintenir une température élevée dans le caisson de chauffage 10 qui est non ventilé.

La ventilation périphérique peut également être déclenchée à titre de sécurité thermique primaire ou secondaire après coupure des moyens de chauffage, pendant les périodes d'inactivité prolongées. Elle permet ainsi de refroidir l'ensemble de la table si pour une raison quelconque (panne de la commande des moyens de chauffage, fausse manoeuvre d'un opérateur, etc.) la température de la table, mesurée par l'une quelconque des sondes 8a à 8c, excédait un seuil de sécurité prédéterminé pour chacune des sondes.

Inversement, si du fait d'une inactivité prolongée, la température moyenne de la table s'abaissait en dessous d'un seuil prédéterminé, ce qui pourrait affecter la qualité du collage lors de la reprise des opérations, l'automate est programmé pour commander l'alimentation en gaz de l'ensemble de la table, pendant une durée prédéterminée ou calculée à partir des températures mesurées, permettant ainsi un mélange entre les particules chaudes du caisson chauffant 10 et celles de la périphérie et la remise en température de la table.

Bien entendu, cette description est donnée à titre d'exemple illustratif uniquement et l'homme du métier pourra y apporter de nombreuses modifications sans sortir de la portée de l'invention, comme par exemple les diverses solutions d'alimentation en gaz évoquées plus haut, ou bien l'utilisation de moyens de chauffage différents. De même, il est à la portée de l'homme du métier de modifier la programmation de l'automate 20 de manière non plus à asservir les différentes durées (activation, réticulation) aux températures mesurées, mais de commander les moyens de chauffage pour obtenir des températures propres à permettre l'exécution de ces phases dans des durées prédéterminées.

## Revendications

1. Dispositif pour le thermocollage d'un revêtement souple (13) sur un support (12), du type comprenant :
- une enceinte (2) pour lit de particules fluidisées par un flux de gaz, comportant un répartiteur de gaz (6a), une grille de diffusion (7a), un lit de particules (4) et une toile souple (3) de couverture,
- un système d'alimentation en gaz (5,5a),
- un organe de compression (14) apte à presser le support sur le lit fluidisé,
**caractérisé en ce que** l'enceinte comporte une zone interne, dite caisson de chauffage (10), de taille inférieure à celle de l'enceinte, placée sensiblement au centre de celle-ci, ledit caisson de chauffage comportant un répartiteur de gaz (6b), une grille de diffusion (7b) et un système d'alimentation en gaz (5b, 9) distincts et isolés de ceux de l'enceinte, ledit caisson de chauffage (10) comprenant en outre des moyens de chauffage (11) adaptés pour être placés dans le lit de particules.

2. Dispositif selon la revendication 1, **caractérisé en ce que** le caisson de chauffage (10) est placé en contrebas de l'enceinte (2), le niveau de sa grille de diffusion (7b) étant plus bas que celui de la grille de diffusion (7a) de l'enceinte.

3. Dispositif selon la revendication 2, **caractérisé en ce que** les moyens de chauffage (11) sont placés au droit de la grille de diffusion (7b) du caisson de chauffage, au niveau ou au-dessous de la grille de diffusion (7a) de l'enceinte.

4. Dispositif selon l'une des revendications 1 à 3, **caractérisé en ce que** les moyens de chauffage (11) sont réalisés par au moins une résistance électrique.

5. Dispositif selon l'une des revendications 1 à 4, **caractérisé en ce qu'**il comporte en outre des moyens de mesure de température (8c, 8b, 8a) associés respectivement aux moyens de chauffage, au lit de particules dans le caisson de chauffage (10) et au lit de particules dans la partie de l'enceinte extérieure au caisson de chauffage.

6. Dispositif selon l'une des revendications 1 à 5, **caractérisé en ce que** le système d'alimentation en gaz du caisson de chauffage comporte une centrale de ventilation distincte de celle de l'enceinte.

7. Dispositif selon l'une des revendications 1 à 5, **caractérisé en ce que** les systèmes d'alimentation en gaz du caisson de chauffage et de l'enceinte comportent une centrale de ventilation (5) commune alimentant deux tubulures distinctes (5a, 5b) et **en ce qu'**au moins la tubulure d'alimentation (5b) du caisson de chauffage (10) comporte une vanne (9) permettant l'interruption et/ou le réglage de l'alimentation dudit caisson en gaz de fluidisation.

8. Dispositif selon l'une des revendications 5 à 7, **caractérisé en ce qu'**il comporte en outre un automate programmable (20) adapté pour au moins recevoir des informations des moyens de mesure de température (8a, 8b, 8c) et commander les moyens de chauffage (11) et les systèmes d'alimentation en gaz (5, 5a, 5b) du caisson de chauffage et de l'enceinte.

9. Dispositif selon la revendication 8, **caractérisé en ce que** l'automate programmable (20) est également adapté pour commander l'organe de compression (14) et exécuter un cycle d'opérations enchaînant des commandes sur ledit organe de compression et les systèmes d'alimentation en gaz respectifs du caisson de chauffage et de l'enceinte.

10. Dispositif selon l'une des revendications 1 à 9, **caractérisé en ce qu'**il comprend également une grille de reprise d'effort (15) s'étendant sur toute la surface de l'enceinte (2), au-dessus de la grille de diffusion (7a) de celle-ci, adaptée pour résister à des efforts développés par l'organe de compression (14) lorsque le lit de particules (4) est solidifié et pour présenter une résistance minimale aux flux de gaz et de particules lorsque le lit de particules est fluidisé.

11. Procédé de thermocollage d'un revêtement souple (13) sur un support (12), du type mettant en oeuvre un dispositif selon l'une quelconque des revendications précédentes, dans lequel on utilise un organe de compression (14) apte à presser le support sur un lit de particules fluidisées par un flux de gaz généré par un système d'alimentation en gaz (5, 5a) dans une enceinte (2) comportant un répartiteur de gaz (6a), une grille de diffusion (7a), un lit de particules (4) et une toile souple (3) de couverture, procédé **caractérisé en ce que** l'on chauffe le lit de particules avec des moyens de chauffage (11) adaptés pour être placés dans le lit de particules et on alimente en gaz une zone interne, dite caisson de chauffage (10), de taille inférieure à celle de l'enceinte, placée sensiblement au centre de celle-ci, ledit caisson de chauffage comportant un répartiteur de gaz (6b), une grille de diffusion (7b) et un système d'alimentation en gaz (5b, 9) distincts et isolés de ceux de l'enceinte.

12. Procédé de thermocollage selon la revendication 11 dans lequel :
- on enduit au moins une des faces en regard du revêtement (13) et du support (12) avec une colle thermo-activable,
- on positionne le revêtement sur la toile souple de couverture (3) du lit fluidisé (4) en regard du support fixé sur l'organe de compression (14),
- on commande le début d'un cycle d'opérations d'un automate programmable (20), lequel
- commande la descente de l'organe de compression vers le lit fluidisé, et concomitamment l'alimentation en gaz au moins du caisson chauffant (10) de manière à générer un flux de gaz et un lit fluidisé de particules à haute température,
- contrôle l'organe de compression de manière à enfoncer ledit support dans le lit fluidisé à haute température pendant une durée propre à permettre l'activation de la colle,
- commande ensuite l'arrêt de l'alimentation en gaz au moins du caisson chauffant de manière à solidifier au moins partiellement le lit de particules et simultanément l'application d'une première pression sur le support de manière à plaquer le revêtement sur le support pendant une durée propre à permettre la réticulation de la colle, et
- à l'issue de ces opérations, on signale une fin de cycle à l'automate qui commande une remontée de l'organe de compression pour déchargement du support revêtu.

13. Procédé de thermocollage selon la revendication 12, **caractérisé en ce que** lorsque l'automate commande l'arrêt de l'alimentation en gaz du caisson, il commande simultanément l'alimentation de la périphérie de l'enceinte en gaz à température ambiante afin de refroidir plus rapidement le lit de particules et d'accélérer la réticulation de la colle.

14. Procédé de thermocollage, selon la revendication 12, **caractérisé en ce qu'**avant de commander la remontée de l'organe de compression, l'automate commande l'arrêt de toute alimentation en gaz et l'application par l'organe de compression d'une pression d'appui supplémentaire du support sur le lit fixe.

15. Procédé de thermocollage selon la revendication 12, **caractérisé en ce que** l'automate surveille les températures de la table en dehors des cycles de production et déclenche une alimentation en gaz du caisson de chauffage lorsque la température du lit de particules dans la périphérie de l'enceinte descend au-dessous d'un seuil prédéterminé.

16. Procédé de thermocollage selon la revendication 12, **caractérisé en ce que** l'automate surveille les températures de la table en dehors des cycles de production et déclenche une alimentation en gaz de la périphérie de l'enceinte lorsque la température du lit de particules excède un seuil prédéterminé.

## Claims

1. Device for thermally bonding a flexible covering (13) to a support (12), of the type comprising:
- an enclosure (2) for a bed of particles fluidised by a stream of gas, comprising a gas distributor (6a), a diffusion mesh (7a), a bed of particles (4) and a flexible cover cloth (3),
- a gas feed system (5, 5a),
- a compression member (14) capable of pressing the support against the fluidised bed,
**characterised in that** the enclosure comprises an internal zone, called a heating box (10), which is smaller in size than the enclosure and is located substantially at the centre thereof, said heating box comprising a gas distributor (6b), a diffusion mesh (7b) and a gas feed system (5b, 9) which are separate and isolated from those of the enclosure, said heating box (10) further comprising heating means (11) suitable for being placed in the bed of particles.

2. Device as claimed in claim 1, **characterised in that** the heating box (10) is positioned at a lower level than the enclosure (2), the level of its diffusion mesh (7b) being lower than that of the diffusion mesh (7a) of the enclosure.

3. Device as claimed in claim 2, **characterised in that** the heating means (11) are located in alignment with the diffusion mesh (7b) of the heating box, at the level of or beneath the diffusion mesh (7a) of the enclosure.

4. Device as claimed in any one of claims 1 to 3, **characterised in that** the heating means (11) are formed by at least one electrical resistor.

5. Device as claimed in any one of claims 1 to 4, **characterised in that** it further comprises temperature measuring means (8c, 8b, 8a) associated with the heating means, with the bed of particles in the heating box (10) and with the bed of particles in the part of the enclosure outside the heating box, respectively.

6. Device as claimed in any one of claims 1 to 5, **characterised in that** the gas feed system of the heating box comprises a ventilation station separate from that of the enclosure.

7. Device as claimed in any one of claims 1 to 5, **characterised in that** the gas feed systems of the heating box and of the enclosure comprise a common ventilation station (5) which feeds two separate pipes (5a, 5b), and **in that** at least the feed pipe (5b) of the heating box (10) comprises a valve (9) allowing the feed of fluidisation gas to said box to be interrupted and/or regulated.

8. Device as claimed in to any one of claims 5 to 7, **characterised in that** it further comprises a programmable controller (20) suitable for at least receiving information from the temperature measuring means (8a, 8b, 8c) and controlling the heating means (11) and the gas feed systems (5, 5a, 5b) of the heating box and of the enclosure.

9. Device as claimed in claim 8, **characterised in that** the programmable controller (20) is also suitable for controlling the compression member (14) and for executing a cycle of operations linking commands for said compression member and the respective gas feed systems of the heating box and of the enclosure.

10. Device as claimed in any one of claims 1 to 9, **characterised in that** it also comprises a load-absorbing grid (15) which extends over the whole of the surface of the enclosure (2), above the diffusion mesh (7a) thereof, and which is suitable for withstanding the loads generated by the compression member (14) when the bed of particles (4) is solidified and for presenting minimal resistance to the streams of gas and particles when the bed of particles is fluidised.

11. Method for thermally bonding a flexible covering (13) to a support (12), of the type using a device according to any one of the preceding claims, in which there is used a compression member (14) capable of pressing the support onto a bed of particles fluidised by a stream of gas generated by a gas feed system (5, 5a) in an enclosure (2) comprising a gas distributor (6a), a diffusion mesh (7a), a bed of particles (4) and a flexible cover cloth (3), which method is **characterised in that** the bed of particles is heated by heating means (11) suitable for being placed in the bed of particles, and gas is fed to an internal zone, called the heating box (10), which is smaller in size than the enclosure and is located substantially at the centre thereof, said heating box comprising a gas distributor (6b), a diffusion mesh (7b) and a gas feed system (5b, 9) which are separate and isolated from those of the enclosure.

12. Thermal bonding method as claimed in claim 11, in which:
- at least one of the facing faces of the covering (13) and of the support (12) is coated with a heat-activated adhesive,
- the covering is placed on the flexible cover cloth (3) of the fluidised bed (4) opposite the support fixed to the compression member (14),
- the start of a cycle of operations of a programmable controller (20) is commanded, which programmable controller
- commands the lowering of the compression member towards the fluidised bed, and at the same time the feed of gas at least to the heating box (10) so as to generate a stream of gas and a fluidised bed of particles at high temperature,
- controls the compression member so as to submerge said support in the fluidised bed at high temperature for a period of time capable of permitting activation of the adhesive,
- then commands the feed of gas to at least the heating box to be stopped in order to at least partially solidify the bed of particles, and at the same time the application of a first pressure to the support so as to flatten the covering on the support for a period of time capable of permitting crosslinking of the adhesive, and
- at the end of those operations, the end of the cycle is indicated to the controller, which commands the raising of the compression member in order to discharge the covered support.

13. Thermal bonding method as claimed in claim 12, **characterised in that**, when the controller commands the stopping of the feed of gas to the box, it at the same time commands the feed of gas at ambient temperature to the periphery of the enclosure in order to cool the bed of particles more rapidly and to accelerate crosslinking of the adhesive.

14. Thermal bonding method as claimed in claim 12, **characterised in that**, before commanding the raising of the compression member, the controller commands the stopping of all gas feed and the application by the compression member of an additional bearing pressure of the support on the fixed bed.

15. Thermal bonding method as claimed in claim 12, **characterised in that** the controller monitors the temperatures of the table outside the production cycles and triggers a feed of gas to the heating box when the temperature of the bed of particles in the periphery of the enclosure falls below a predetermined threshold.

16. Thermal bonding method as claimed in claim 12, **characterised in that** the controller monitors the temperatures of the table outside the production cycles and triggers a feed of gas to the periphery of the enclosure when the temperature of the bed of particles exceeds a predetermined threshold.

## Patentansprüche

1. Vorrichtung zum Heißverkleben einer flexiblen Abdeckung (13) auf einem Träger (12) von dem Typ, umfassend:
- eine Einfassung (2) für ein Bett aus durch einen Gasstrom verflüssigten Partikeln, umfassend einen Gasverteiler (6a), ein Verteilergitter (7a), ein Bett aus Partikeln (4) und ein flexibles Abdeckleinen (3),
- ein Gasversorgungssystem (5, 5a)
- ein Kompressionsorgan (14), das geeignet ist, den Träger auf dem verflüssigten Bett zu pressen,
**dadurch gekennzeichnet, dass** die Einfassung einen internen Bereich, bezeichnet als Heizgehäuse (10) mit einer geringeren Größe als den der Einfassung umfasst, der deutlich im Zentrum desselben platziert ist, wobei das genannte Heizgehäuse einen Gasverteiler (6b), ein Verteilergitter (7b) und ein Gasversorgungssystem (5b, 9) umfasst, die von denen der Einfassung unterschiedlich und isoliert sind, wobei das genannte Heizgehäuse (10) darüber hinaus Heizmittel (11) umfasst, die geeignet sind, um in dem Bett aus Partikeln platziert zu werden.

2. Vorrichtung gemäß Anspruch 1, **dadurch gekennzeichnet, dass** das Heizgehäuse (10) unterhalb der Einfassung (2) platziert ist, wobei das Niveau seines Verteilergitters (7b) niedriger ist als das des Verteilergitters (7a) der Einfassung.

3. Vorrichtung gemäß Anspruch 2, **dadurch gekennzeichnet, dass** die Heizmittel (11) gegenüber dem Verteilergitter (7b) des Heizgehäuses auf dem Niveau oder unterhalb des Verteilergitters (7a) der Einfassung platziert sind.

4. Vorrichtung gemäß Anspruch 1 bis 3, **dadurch gekennzeichnet, dass** die Heizmittel (11) durch wenigstens einen elektrischen Heizwiderstand realisiert sind.

5. Vorrichtung gemäß Anspruch 1 bis 4, **dadurch gekennzeichnet, dass** es darüber hinaus Temperaturmessmittel (8c, 8b, 8d) umfasst, die jeweils den Heizmitteln, dem Bett aus Partikeln im Heizgehäuse (10) und dem Bett aus Partikeln in dem Teil der Einfassung au-βerhalb des Heizgehäuses zugeordnet sind.

6. Vorrichtung gemäß Anspruch 1 bis 5, **dadurch gekennzeichnet, dass** das Gasversorgungssystem des Heizgehäuses eine von der der Einfassung unterschiedliche Belüftungszentrale umfasst.

7. Vorrichtung gemäß Anspruch 1 bis 5, **dadurch gekennzeichnet, dass** die Gasversorgungssysteme des Heizgehäuses und der Einfassung eine gemeinsame Belüftungszentrale (5) umfassen, die zwei unterschiedliche Düsen (5a, 5b) versorgen und dass wenigstens die Versorgungsdüse (5b) des Heizgehäuses (10) ein Ventil (9) umfasst, das die Unterbrechung und / oder die Einstellung der Versorgung des genannten Gehäuses mit Verflüssigungsgas erlaubt.

8. Vorrichtung gemäß Anspruch 5 bis 7, **dadurch gekennzeichnet, dass** sie darüber hinaus einen programmierbaren Automaten (20) umfasst, der geeignet ist, um wenigstens die Informationen der Temperaturmessmittel (8a, 8b, 8c) zu empfangen und die Heizmittel (11) und die Gasversorgungssysteme (5, 5a, 5b) des Heizgehäuses und der Einfassung zu steuern.

9. Vorrichtung gemäß Anspruch 8, **dadurch gekennzeichnet, dass** der programmierbare Automat (20) ebenfalls geeignet ist, um das Kompressionsorgan (14) zu steuern und einen Zyklus von Operationen auszuführen, der Steuerungen auf dem genannten Kompressionsorgan und den jeweiligen Gasversorgungssystemen des Heizgehäuses und der Einfassung aneinanderreiht.

10. Vorrichtung gemäß Anspruch 1 bis 9, **dadurch gekennzeichnet, dass** sie ebenfalls ein Aufnahmegitter für Beanspruchungen (15) umfasst, das sich über die gesamte Fläche der Einfassung (2) oberhalb des Verteilergitters (7a) derselben erstreckt, das geeignet ist, um den von dem Kompressionsorgan (14) entwickelten Beanspruchungen zu widerstehen, wenn das Bett aus Partikeln (4) verfestigt ist, und um einen minimalen Widerstand gegen die Gas- und Partikelströme aufzuweisen, wenn das Bett aus Partikeln verflüssigt ist.

11. Verfahren zum Heißkleben einer flexiblen Beschichtung (13) auf einem Träger (12) von dem Typ, der eine Vorrichtung gemäß einem der voranstehenden Ansprüche umsetzt, in dem ein Kompressionsorgan (14) verwendet wird, das geeignet ist, den Träger auf einem Bett aus durch einen von einem Gasversorgungssystem (5, 5a) in einer einen Gasverteiler (6a), ein Verteilergitter (7a), ein Bett aus Partikeln (4) und ein flexibles Abdeckleinen (3) umfassende Einfassung (2) generierten Gasstrom verflüssigten Partikeln zu pressen, wobei das Verfahren **dadurch gekennzeichnet ist, dass** das Bett aus Partikeln mit Heizmitteln (11) geheizt wird, die geeignet sind, um in das Bett aus Partikeln platziert zu werden und ein interner Bereich, bezeichnet als Heizgehäuse (10) mit einer geringeren Größe als die der Einfassung mit Gas versorgt wird und das deutlich im Zentrum derselben platziert ist, wobei das genannte Heizgehäuse einen Gasverteiler (6b), ein Verteilergitter (7b) und ein Gasversorgungssystem (5b, 9) umfasst, die von denen der Einfassung unterschiedlich und isoliert sind.

12. Verfahren zum Heißkleben gemäß Anspruch 11, in dem:
- wenigstens eine der Seiten gegenüber der Beschichtung (13) und des Trägers (12) mit einem thermisch aktivierbaren Klebstoff beschichtet wird,
- die Beschichtung auf dem flexiblen Abdeckleinen (3) des verflüssigten Bettes (4) gegenüber dem auf dem Kompressionsorgan (14) befestigten Träger positioniert wird,
- der Beginn eines Zyklus von Operationen eines programmierbaren Automaten (20) gesteuert wird, der
- das Herunterfahren des Kompressionsorgans zum verflüssigten Bett und gleichzeitig die Gasversorgung wenigstens des Heizgehäuses (10) derart gesteuert werden, dass ein Gasfluss und ein verflüssigtes Bett aus Partikeln mit hohen Temperaturen generiert wird,
- das Kompressionsorgan derart kontrolliert wird, dass der genannte Träger in das verflüssigte Bett mit hohen Temperaturen über eine Dauer eingetaucht ist, die geeignet ist, die Aktivierung des Klebstoffs zu erlauben,
- anschließend die Abschaltung der Gasversorgung wenigstens des Heizgehäuses derart gesteuert wird, dass wenigstens die teilweise Verfestigung des Bettes aus Partikeln und gleichzeitig die Anwendung eines ersten Drucks auf den Träger derart gesteuert werden, dass die Beschichtung über eine Dauer, die geeignet ist, die Vernetzung des Klebstoffs zu erlauben, auf den Träger gedrückt wird,
- und nach Abschluss dieser Operationen dem Automaten ein Zyklusende gemeldet wird, das ein Wiederhochfahren des Kompressionsorgans für die Entlastung des beschichteten Trägers steuert.

13. Verfahren zum Heißkleben gemäß Anspruch 12, **dadurch gekennzeichnet, dass**, wenn der Automat die Abschaltung der Gasversorgung des Gehäuses steuert, er gleichzeitig die Versorgung der Peripherie der Einfassung mit Gas der Umgebungstemperatur steuert, um das Bett aus Partikeln schneller abzukühlen und die Vernetzung desselben zu beschleunigen.

14. Verfahren zum Heißkleben gemäß Anspruch 12, **dadurch gekennzeichnet, dass** der Automat vor der Steuerung des Wiederhochfahrens des Kompressionsorgans die Abschaltung der gesamten Gasversorgung und die Anwendung eines zusätzlichen Stützdrucks des Trägers auf dem festen Bett durch das Kompressionsorgan steuert.

15. Verfahren zum Heißkleben gemäß Anspruch 12, **dadurch gekennzeichnet, dass** der Automat die Temperaturen des Tisches außerhalb der Produktionszyklen überwacht und eine Gasversorgung des Heizgehäuses auslöst, wenn die Temperatur des Bettes aus Partikeln in der Peripherie der Einfassung unter einen vorbestimmten Schwellenwert fällt.

16. Verfahren zum Heißkleben gemäß Anspruch 12, **dadurch gekennzeichnet, dass** der Automat die Temperaturen des Tisches außerhalb der Produktionszyklen überwacht und eine Gasversorgung der Peripherie der Einfassung auslöst, wenn die Temperatur des Bettes aus Partikeln einen vorbestimmten Schwellenwert übersteigt.
